# EUROPEAN PATENT APPLICATION

(11) **EP 2 995 911 A1**
(43) Date of publication of application: **16.03.2016**
(21) Application number: 15181343.3
(22) Date of filing: 18.08.2015
(51) Int. Cl.: G01F 11/46, A47G 19/34, A47G 19/24

(54) **METERED DISPENSER FOR ADMINISTRATION OF NUTRIENTS**

(30) Priority: 10.09.2014 US 201462048492 P; 30.10.2014 US 201462072525 P
(71) Applicant: Singh, Bipan Deep, San Luis Obispo, CA 93401 (US)
(72) Inventor: Singh, Bipan Deep, San Luis Obispo, CA 93401 (US)
(74) Representative: Qip Patentanwälte Dr. Kuehn & Partner mbB

(57) **Abstract**

Another aspect of the present invention comprises a dispenser having one or more cavities, wherein the cavities may be selectively opened and closed such that by controlling the cavity and closing of the cavities, material may be dispensed. The cavities may be arranged in any manner and may comprise the same or different volumes.

## Description

### CROSS REFERENCE TO RELATED APPLICATIONS

The present application claims the benefit of the filing date of U.S. Provisional Patent Application No. 62/072,525 filed October 30, 2014, which claims the benefit of the filing date of U.S. Provisional Patent Application No. 62/048,492 filed September 10, 2014, the disclosures of which are hereby incorporated herein by reference.

### BACKGROUND OF THE INVENTION

According to the United States Centers for Disease Control and Prevention (CDC) high blood pressure contributes to nearly 400,000 deaths annually, as well as other cardiac complications. Table salt (NaCL) is cited by the CDC as associated with increased blood pressure. Excess sodium intake shifts extra fluid into the blood stream thus making it difficult for a weakened heart to function properly and pump blood to the rest of the body. Decreasing sodium intake is one way to prevent high blood pressure.

One challenge faced by the average person is reducing their sodium intake when they are unaware of what their proper daily amount of sodium should be. Compounding this problem is that most recipes suggest adding "salt to taste." Such unrestricted use of salt makes it difficult, if not impossible, to know how much sodium is in the food a person consumes. Further, the average saltshaker found in most homes does not incorporate any type of volumetric control mechanism. Instead, the shaker permits an unrestricted flow of salt.

Pre-packaged foods indicate on their label how much sodium is contained in each serving of the product and the corresponding percent of the suggested daily value of sodium intake for an average user. However, the suggested daily value does not take into account that a person may be on a sodium restricted diet. The CDC recommends 2,300 milligrams of salt per day for a normal diet and 1,500 milligrams of salt per day for a restricted diet. For those following such a restricted diet, the percent daily value may be much higher than what is reflected on the pre-packaged label.

Therefore, a need exists for a salt dispenser which meters a selected amount based on a person's total daily salt allotment along with method to tally the total daily intake of salt.

### SUMMARY OF THE INVENTION

In one aspect of the present invention is a dispenser comprising a chamber for holding a material prior to administration, and a metering mechanism to precisely meter and/or administer a desired amount of the material, wherein the metering mechanism comprises at least one selection member having one or more cavities therein, and wherein the cavities are opened and closed such that the material flows from the chamber and through the metering mechanism. In some embodiments, the cavities are opened and closed by rotating the at least one selection member past an opening having a source of material. In some embodiments, the dispenser comprises two selection members. In some embodiments, each selection member includes four cavities, wherein the size of any cavity may be the same or different, provided that the size of the cavities in a first selection member correlate to those in a second selection member. In some embodiments, a desired material amount may be metered and/or administered by opening and closing a cavity one or more times. In some embodiments, the size of the cavity corresponds to an amount of granulated salt (NaCl).

In some embodiments, the metering mechanism is coupled to a motor, wherein the motor is in electronic communication with control logic, including a user interface, which allows user inputs to be entered such that an amount of material measured by the metering mechanism may be altered. In some embodiments, the control logic includes a counter for displaying useful parameters, such as user-defined settings or an amount of material administered.

In another aspect of the present invention is a metered dispenser comprising (a) a chamber for holding a material to be administered; (b) a top selection member having one or more top cavities, wherein each of the top cavities are in direct communication with the material in the chamber; (c) a bottom selection member parallel and coupled to the top selection member, the bottom selection member having one or more bottom cavities; and (d) a transfer conduit situated between, but not coupled to, the top and bottom selection members and comprising a space configured to receive material from the one or more top cavities through a first opening and to provide material to the one or more bottom cavities through a second opening, and wherein the first and second openings of the transfer conduit are opposite from each other, and wherein the transfer conduit does not rotate with said top and bottom selection members.

In some embodiments, the material is salt. In some embodiments, the top selection member comprises a plurality of cavities and wherein the bottom selection member comprises an equal number of cavities as the top selection member. In some embodiments, each of the cavities in each of the selection members are the same size. In some embodiments, the cavities each may hold an amount of granulated salt ranging from about 20mg to about 50mg. In some embodiments, the amount is about 35mg. In some embodiments, at least one of the cavities in the top selection member is differently sized from the remaining cavities in the top selection member. In some embodiments, the bottom selection member comprises cavities of the same size as those in the top member. In some embodiments, the top cavities and the bottom cavities are misaligned relative to each other. In some embodiments, the metered dispenser further comprising a motor, control logic, and a user interface. In some embodiments, the metered dispenser administers salt based on a normal diet, a restricted diet, or any variation therein. In some embodiments, the metered dispenser further comprises an exit opening in communication with the bottom cavities. In some embodiments, a size of transfer conduit together with the number of exposures to top and bottom cavities determines the amount of material administered through the dispenser.

In another aspect of the present invention is a method of administering salt with a metered dispenser as described herein.

In another aspect of the present invention is a method of tracking salt intake comprising the steps of (1) providing a metered dispenser as described herein; (2) providing salt in the top cavities; and (3) sequentially rotating the top and bottom selection members, each containing one or more cavities, such that salt is sequentially transferred from the top cavities through a transfer conduit and into the bottom cavities; and further transferred from the bottom cavities through the exit opening. In some embodiments, the top and bottom selection members each comprise four cavities. In some embodiments, the transfer conduit is sized such that it holds about 35mg of granulated salt. In some embodiments, the top and bottom selection members fully rotate once, so as to administer about 140mg of salt. In some embodiments, the top and bottom selection members are actuated by an electric motor.

In another aspect of the present invention is a salt dispenser having an electric motor, a metering mechanism engaged with said motor, control logic electrically coupled to said electric motor, and a chamber for holding salt and from which the salt may be metered and dispensed by the metering mechanism. In some embodiments, a salt volume may be administered by the operator pushing a button, and where the control logic causes the electric motor to actuate the metering mechanism such that salt may be dispensed.

In another aspect of the present invention is a method of adhering to a particular salt diet comprising the steps of providing an input of a total daily salt intake and/or a number of meals/servings which will be consumed each day; calculating an amount of salt for each meal/serving; metering the calculated amount of salt from a dispenser so configured. In some embodiments, the method is tied to a computer or other control logic having a memory and a processing unit. In some embodiments, additional administrations of salt are restricted.

In another aspect of the present invention is a metered dispenser comprising a chamber, a first selection member having a first plurality of cavities, a second selection member having a second plurality of cavities, a first indicator coupled to the first selection member, and a second indicator coupled to the second selection member; wherein the first selection member is adapted to be manipulated by a user to select a dispensing volume or mass, and the second selection member is adapted to be manipulated by the user to align at least one of the second plurality of cavities with at least one of the first plurality of cavities.

In another aspect of the present invention is a method of tracking sodium intake comprising providing a metered dispenser comprising a chamber containing salt, a first selection member having a first plurality of cavities, a second selection member having a second plurality of cavities, a first indicator coupled to the first selection member, and a second indicator coupled to the second selection member; wherein the first selection member is adapted to be manipulated by a user to select a dispensing volume or mass, and the second selection member is adapted to be manipulated by the user to align at least one of the second plurality of cavities with at least one of the first plurality of cavities; selecting one of the first plurality of cavities based on total daily salt intake and aligning the selected one of the first plurality of cavities with the chamber exit, selecting one of the second plurality of cavities based on the desired ration of total daily salt intake to be dispensed and aligning the selected one of the second plurality of cavities with the selected one of the first plurality of cavities, and dispensing the selected amount of salt from the metered dispenser.

### BRIEF DESCRIPTION OF THE FIGURES

FIG. 1 is a bottom view of a selection member showing a plurality of cavities;
FIG. 2 is a bottom view of a metered dispensing device;
FIG. 3 is a top view of a selection member showing a plurality of cavities;
FIG. 4 is a side view of two selection members coupled to one another;
FIG. 5 is a top view of a metered dispensing device;
FIG. 6 is an angled view of a metered dispensing showing a transfer conduit and a coupling mechanism;
FIG. 7 shows a series of selection members that may be used in a metered dispensing device.

### DETAILED DESCRIPTION

Although the invention disclosed in this application has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the spirit and scope of the present invention as defined by the appended exemplary claims.

In some embodiments of the present invention is a dispenser comprising a chamber for holding a material prior to administration, a metering mechanism to precisely meter and/or administer a desired amount of the material. The dispenser may also optionally comprise a (1) tracker or counter; (2) a user interface for selecting a desired amount of material; (3) an agitator or vibrational generator; (4) electronics; (5) a power source, e.g. a battery; (6) a grinder for milling salt larger than a pre-defined size; and/or (7) blades or other means of slicing through material.

In some embodiments, a metered dispenser can be used to meter and dispense a pre-granulated material. In other embodiments, material may be milled to a certain size prior to being metered and dispensed (to produce, for example, a granulate material).

In some embodiments, the dispenser may be used to dispense salts (e.g. NaCl), sugar, nutrients, vitamins, spices, supplements, or herbal medicines. "Salt" is referenced as the material in the dispenser for demonstration purposes but the invention should not be limited to such and may include any of the aforementioned materials and others which may be appropriately adapted. Salt may be standard iodized or uniodized salt, sea slat, or kosher salt, etc.

In general, the dispenser is adapted to precisely meter, measure and/or administer an amount of material. As used herein, the term "amount" may refer to either a volume or mass of material. Given that small quantities of material may be administered or rationed, the skilled artisan will be able to develop and modify the invention disclosed herein to adapt to specific materials and the amounts in which they are routinely administered, e.g. by selecting a specifically sized metering mechanisms to administer appropriate amounts or portions of the selected material.

The amount of material administered may be based on daily-recommended values of the material. For example, an amount of salt administered may be based on guidelines established by the FDA, the American Heart Association, or Center for Disease Control. In some embodiments, a dispenser can be used to administer an amount of salt based on a normal sodium intake diet, a restricted sodium intake diet, or any variation therein. For example, the dispenser may be configured to dispense a total amount of salt ranging between about 1500mg to about 2300mg per day based on a restricted versus normal sodium diet.

In some embodiments, a dispenser can be used to administer an amount of salt based on varying taste levels. For example, there is a continuum of different levels of salt amounts which can be administered based on dietary concerns or the particular desires of the user (e.g. salt to taste). A dispenser may have two to five different settings, corresponding to different amounts of salt per serving. The range may vary between about 35mg per serving to about 600mg per serving allowing user to dispense salt to their desired taste. The dispenser will also keep track of salt being dispensed throughout the day or for extended period of time (such as week or month) and make the user aware of their total salt intake so they may maintain their consumptions levels within the guidelines.

The dispenser can be configured to administer salt based on a total daily amount basis or on per serving basis. Those skilled in the art will appreciate, however, that configuring the dispenser on a total daily amount basis will allow stricter adherence to dietary needs or recommendations. In some embodiments, the dispenser may be configured to allow the dispenser to administer salt "to taste," i.e. without any restrictions.

In some embodiments, the dispenser is configured to dispense an amount of salt corresponding to a percentage of a user's daily salt intake. For example, after a user selects an amount of salt (regardless of whether the amount corresponds to a particular type of diet), the user will then select the number of meals (or dishes) for which the salt will be applied throughout the day. In this way, the user does not exceed the selected total amount of salt and that the amount is evenly distributed throughout the day. The device may also include means of assigning different values to different meals or different times of day (e.g. larger salt amounts may be administered at dinner versus at breakfast).

Moreover, the dispenser may have the ability to add additional salt in predefined amounts for added taste. For example, it is common to add an additional "pinch" of salt to add additional flavor to a meal and this additional "pinch" can be a small pre-defined amount which an operator can add one or more times. Here, the pre-defined amount can be a fixed amount or a percentage of an amount based on whether a normal or restricted diet is selected or required. In some embodiments, the "pinch of salt" feature may be locked-out for those on restricted salt diets. In one example, the "pinch" ranges from about 20mg to about 50mg. In one example, the "pinch" is about 35mg. Multiple "pinches" may be administered, unless otherwise deactivated (e.g. for a restricted diet).

The device may also include logic (e.g. a program or set of instructions or algorithms) that enables a user to gradually reduce salt intake. For example, control logic may be included where the user inputs a initial salt diet and a proposed salt diet and the logic will calculate the rate to wean a user off the salt and dispense appropriate amounts of salt which, over time, gradually lessens from the initial salt diet to the proposed salt diet. In some embodiments, the user could also input the rate at which the weaning should occur (e.g. a three week period). In some embodiments, the "pinch" feature is disabled such that a user does not violate the gradual reduction scheme or, perhaps, the "pinch" feature only works during certain periods of the gradual reduction scheme.

In some embodiments, the dispenser can be configured to administer salt to one person, two people, or more than two people, again based on a normal sodium diet, a restricted sodium diet, or any incremental variant therein. Individual users can program the dispenser through the user interface inputting maximum/minimum allotments for a specific time period or a meal type etc. The dispenser can store these settings in the memory for each user and can apply the stored data for future usages with the need for repeated inputs on daily basis. As such, in other embodiments, the user may select how many servings are being prepared (e.g. for two people) and what percent of the daily salt intake they would like to dispense. It is believed that this allows a user to dispense a controlled dose of salt regardless of whether they are preparing a food or beverage with more than one serving.

In some embodiments, the dispenser can be configured to administer salt per serving according the guidelines established by FDA. A user may make a selection to dispense salt to prepare a low sodium meal or a moderately salty meal. In case of low sodium diet the dispenser will dispense only 140mg of salt per serving (as defined by FDA).

In some embodiments, the dispenser also includes a means of tracking total salt administered for a given time period (e.g. for a single meal, a day, a week, a month, etc.). The tracker or counter can be a dial, slidable tracker, or any other type of tracker known in the industry. In some embodiments, the counter is moved manually by the user each time the dispenser is used. In other embodiments, the dispenser automatically advances the counter each time the dispenser is used and can optionally be tied to the salt dispensing mechanism itself.

In some embodiments, the dispenser may include an electronic counter. The electronic counter may be automatically or manually activated by a pushbutton, pressure transducer, piezoelectric sensor or other electric or mechanical switch capable of sending an electronic signal to a counter. The counter may be tied directly to the salt metering mechanism and advance only as salt is actually administered.

The counter can be reset manually or automatically after each time period to restart the tracking. In some embodiments, the dispenser may include a lockout device that prevents additional salt from being dispensed once the counter reaches a pre-determined maximum allotment for a given period.

A dispenser incorporating an electric counter may also include a circuit for communicating with external devices. The communication may be through wifi, Bluetooth, zigbee, or similar communication protocols. The device may communicate to a user's mobile device or other personal computers and then to other networks to deliver sodium intake information to a user or other third parties, such as a doctor or other patient care provider. One circuit contemplated for use with the current device is disclosed in U.S. Patent No. 6,958,691, the disclosure of which is incorporated by reference as if fully set forth herein. The dispenser can also receive communications from a user's mobile device or personal computers. Such communication will allow the users to program the dispenser using external devices so they do not have to solely relay on dispenser for inputting the data.

In some embodiments, the tracker may convert an amount (mass or volume) to an output more appropriate for tracking a particular type of material. For example, if sugar is the material being metered and dispensed, the tracker could track an amount of the sugar and convert that amount into a calorie or carbohydrate output and any electronics included therein could track or retain the calorie or carbohydrate count. This same theory is applicable to other materials which could be metered and dispensed and any useful output could be generated provided that the electronics, including a processor and memory, are provided the necessary inputs and unit conversion data.

The dispenser includes a chamber that holds the salt to be dispensed. The chamber includes an opening in communication with a metering mechanism such that salt may flow from the chamber to the metering mechanism and eventually allow for administration of the salt from the device. In some embodiments, the material is in direct communication with the metering mechanism.

In some embodiments, the chamber may be fixed to the device such that once the total amount of salt has been used the device is discarded. In other embodiments, the chamber may be refillable to create a multi-use device. In yet other embodiments, the dispenser may be configured to receive replaceable cartridges of salt nutrients, or other materials. The replaceable cartridges may contain a total amount of salt corresponding to a predetermined volume for a given period of time (e.g. days, weeks). For example, a cartridge may contain a sufficient volume for a person on a normal diet to use for one day. At the end of each day, the cartridge can be replaced.

In some embodiments, the dispenser includes a grinder to mill material over a certain size. The grinder may be situated beneath the chamber such that material may be milled prior to being metered. It is also possible to include a grinder before the chamber such that a user may mill material for storage in the chamber prior to metering.

In some embodiments, mechanical devices are included to agitate the chamber and/or metering mechanism to physically prevent, mitigate or remove agglomerations or other accumulations of salt. For example, a vibration mechanism may be included in the device to cause the chamber and/or the metering mechanism to vibrate and thus prevent or remove agglomerations. It is believed that the vibration mechanism may also function to provide feedback to the user that the device is in operation, i.e. turned on and dispensing or administering salt.

A metering mechanism is attached or coupled to the chamber (and/or grinder if so equipped) and in communication with it. The metering mechanism is also in communication with an exit opening in the base of the device. In some embodiments, the exit opening is opposite the opening leading from the chamber to the metering mechanism, such that salt may flow through the metering mechanism and be administered. The user can move the metering mechanism by manually manipulating the mechanism or its individual components directly or indirectly, such as by via direct contact, pushbuttons, levers, pulleys, or other types of mechanical manipulation.

In other embodiments, motors may be implemented to move the metering mechanism or its individual components based on input from the user. The user may select an amount of salt for administration via pushbutton, touchpad, switch, etc. and the motors automatically align, manipulate, or actuate the respective parts of the metering mechanism to dispense the selected amount.

In some embodiments, the metering mechanism is formed by one or more selection members, gears, discs or plates (collectively referred to herein as "selection members") each containing one or more openings, holes, slits, or cavities (or an combination thereof) of varying sizes and shapes (collectively referred to herein as "cavities"). In one embodiment, the selection member is a rotatable disc or gear. In other embodiments, the selection member is a plate that is capable of translation along an axis transverse to, or aligned with, the axis (horizontal or vertical) of the chamber to administer a desired amount of salt.

In some embodiments, the metering mechanism comprises a plurality of selection members. The selection members may be independently operable such that their manipulation allows precise metering, measuring, and/or administration of salt. In some embodiments, selection members are coupled to each other such the rotation of one necessarily causes rotation of the other. In some embodiments, the cavities in different selection members are misaligned relative to each other. This is especially important in embodiments where the selection members are coupled to each other and rotate together. Misalignment of cavities serves to prevent salt, in communication with a first metering member, from passing freely through to the second metering member and ultimately through an exit opening.

In some embodiments, a single cavity may be included in a selection member. In other embodiments, multiple cavities may be included in a selection member. The cavities can be the same size or different sizes. In embodiments, where the cavity in the selection member is used to measure an amount of material, the thickness of the selection member coupled with the size of the cavity(s) may correspond to an amount (such as by volume) of salt to be dispensed. For simplicity, a cavity having a size pertaining to miligrams of granulated salt is disclosed herein, but the skilled artisan will be able to develop a cavity of sufficient size or volume correlating to an amount of any material (by volume or mass) to be administered. The cavities may be grouped together or spaced apart from each other such that any given amount of material may be dispensed through one cavity or a combination of cavities. In other embodiments, the selection member may comprise a cavity having a variable aperture that restricts the size of the cavity.

The metering mechanism may also comprise one or more transfer conduits that are positioned, in some embodiments, between selection members. A transfer conduit is essentially a space between selection members that receives, releases, or holds salt. In some embodiments, a selection member has a first opening in communication with cavities in a first selection member and a second opening, opposite the first opening, that is in communication with cavities in the second selection member.

The cavities, when aligned with the opening in the chamber, a transfer conduit, cavities in other selection members, or with the opening in the base (exit opening), allow salt to flow from the chamber, through the metering mechanism, and be administered. In some embodiments, a desired salt content may be metered and/or administered by the metering mechanism by opening and closing a cavity one or more times. By "opening and closing a cavity" it is meant that a cavity in a selection member is rotated past an opening (e.g. an opening in another selection member or an opening in a transfer conduit) allowing salt to flow into the cavity from an area having salt or from a cavity having salt and into an opening into another space. Thus, a cavity in the selection member is open when it is aligned with an opening from which or to which salt may flow. Likewise, a cavity in the selection member is closed when it is not aligned with an opening from which or to which salt may flow.

In some embodiments, the cavities in the selection member measure the amount of salt. Thus, the cavities could act like a container sized to hold and release a specific amount of material as the cavity is opened and closed. Indeed, in embodiments where selection members are adjacent and touching, and independently operable (not coupled to each other), each time cavities align as selection members rotate past each other, salt may flow from a cavity in a first selection member to a cavity in a second selection member. In these embodiments, the cavity itself is designed to be of a certain size and hold a certain amount of material without the need for a transfer conduit.

In some embodiments, the cavities are mere openings from which a material may free-flow through. For example, in some embodiments, the material to be dispensed (from the chamber) is in direct contact with a first selection member having a plurality of cavities. Those cavities, because of the direct contact with the material, are filled with the material. If the cavities in the first selection member are closed, i.e. they are not in communication with any other openings besides the material storage chamber, that material cannot free-flow out of the cavities. However, once the selection member is rotated past an opening, the material in the cavity may free-flow into that other opening. In some embodiments, it is the speed of the rotation of the first selection member, the size of the cavity, and/or the size of the transfer conduit or other opening, that limits the free-flow of material and thus limits the amount of material metered. For example, if multiple cavities are in a selection member and that selection member rotates slowly, any opening or space, such as a transfer conduit, will be filled during the slow rotation, and thus the volume of that space limits the metering. On the other hand, if the selection member is rotated very quickly, it is entirely possible that the transfer conduit will not be entirely filled with material as any single cavity opens and closes past it. In some embodiments, the transfer conduit may have a size such as those disclosed herein for the cavities. In some embodiments, the transfer conduit may hold about 35mg of salt.

Where first and second selection members are coupled to each other such that they rotate together, a space, such as a transfer conduit, may exist between the selection members that does not rotate as the selection members rotate. In these embodiments, the transfer conduit comprises a first end having a first opening that is in communication with the cavities in the first selection member as they rotate past the first transfer conduit opening. Likewise, the transfer conduit comprises a second end having a second opening, opposite the first opening, that is in communication with the cavities in the second selection member as they rotate past the second transfer conduit opening. As such, salt may flow from a cavity in a first selection member through the first opening in the transfer conduit and into a space within the transfer conduit; and as a cavity in a second selection member is rotated past the second opening in the transfer conduit, salt may flow from the space within the transfer conduit and into a cavity in a second selection member. Of course, once the second selection member rotates past an exit opening, it may be dispensed or administered. In some embodiments, the cavities in different selection members are misaligned from each other such that the selection members operate (i.e. open and close) sequentially, so as to prevent salt from free flowing from the chamber and through the metering mechanism, such as through a first selection member, into a transfer conduit, and into a second selection member. The skilled artisan will, of course, recognize that any of the aspects disclosed above could be applied to devices having metering mechanisms comprising more than two selection members. For example, a member mechanism with four selection members may have two transfer conduits and the cavities may be opened and closed according to transfer salt between the individual components to an exit opening.

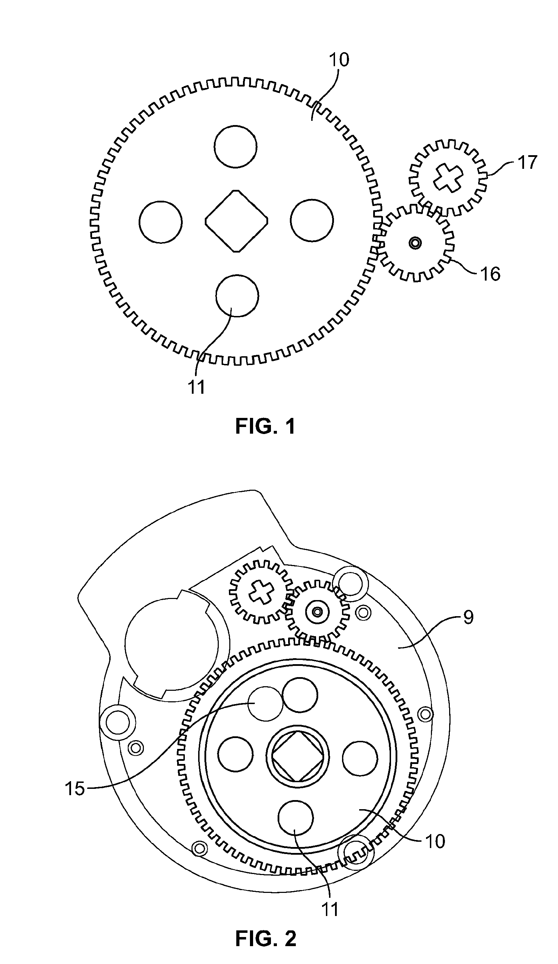

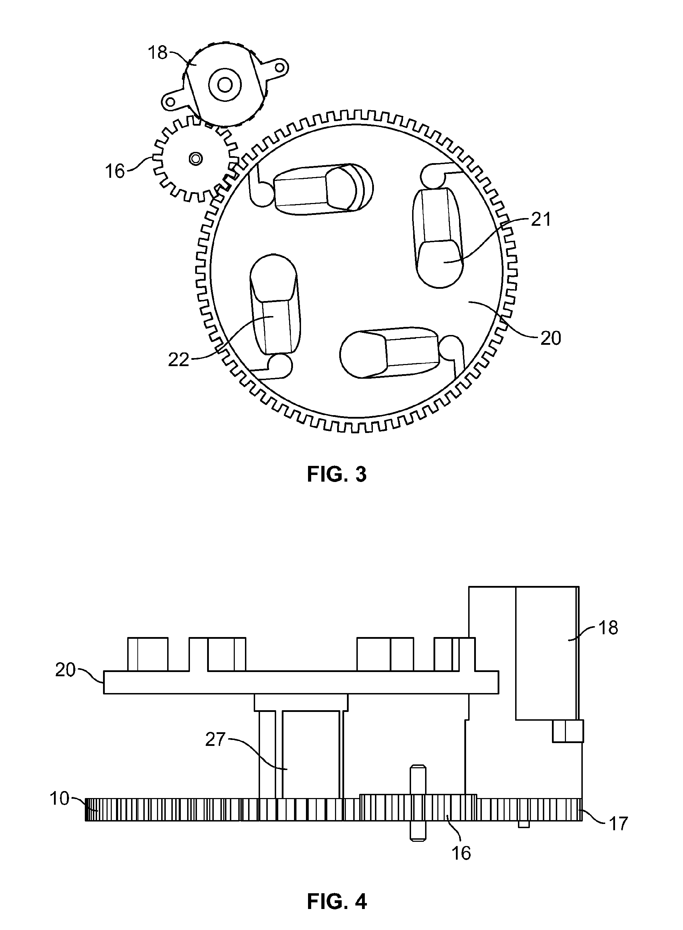

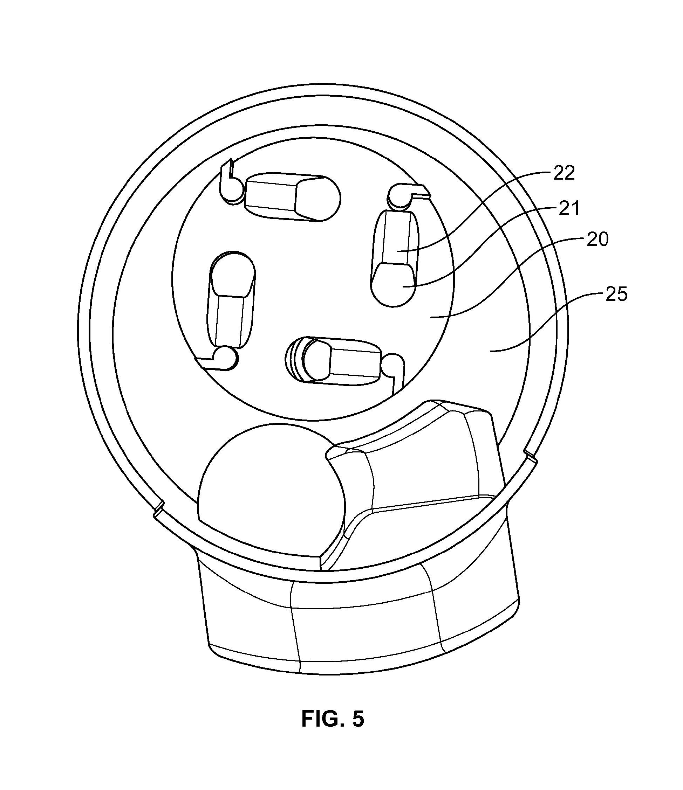

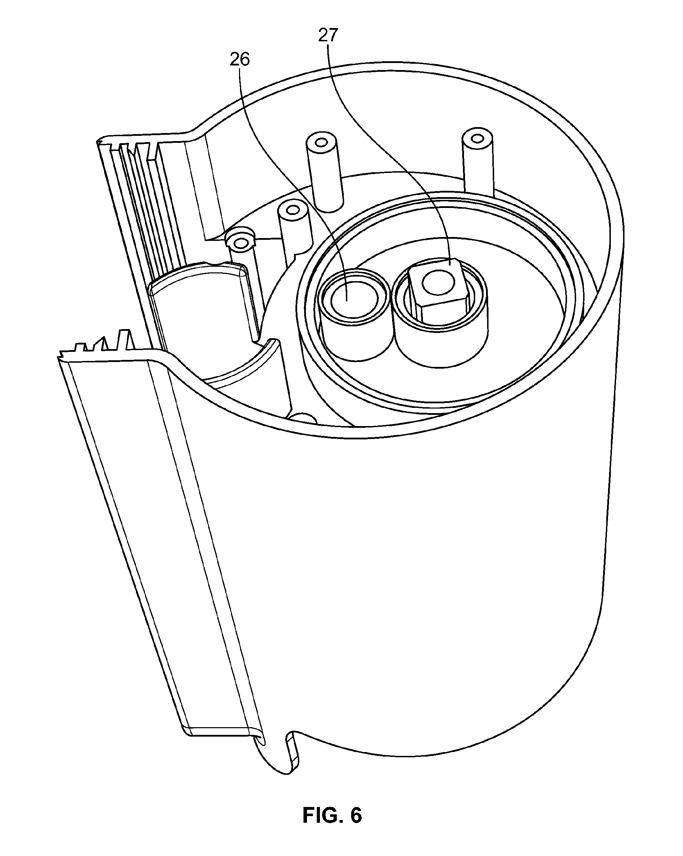

In one particular embodiment, shown in Figures 1-6 is a motorized dispenser having two selection members, with each selection member having four cavities therein. As shown in Figure 3, the cavities 21 in the top selection 20 member have recesses 22 or blades which assist in cutting, moving, and or pushing salt through the cavity 21 and/or assist in breaking up salt agglomerations, sealing the chamber from outside air, and/or sweeping salt into the cavity 21. In Figure 3, the cavities are each in a closed position.

While not shown in the Figures, the cavities 21 and 11 in the top and bottom selection members 20 and 10 are not aligned and are thus offset from each other, thus material cannot flow freely from one selection member to the next. As shown in Figure 4, the selection members 20 and 10 are parallel to each other and joined via a shaft 27, i.e. they are coupled together via the shaft 27. A motor 18 is also depicted. Attached to the motor is a motor gear 17 to articulate an intermediate gear 16, whereby the intermediate gear transfers rotational energy to the bottom selection member 10. As such, when the motor is in operation, it turns both the top and bottom selection members 20 and 10, respectively. Being that the top cavities and bottom cavities are misaligned relative to each other, cavities in each selection member "open" and "close" independently of each other.

Again, with regard to Figures 1-6, the top selection member 20 is in direct communication with the contents contained within the chamber (bottom of chamber shown as 25). For example, a chamber may be filled with salt and the salt rests upon and is in direct communication with the top selection member 20 (and/or in communication with the cavities 21 contained within the top selection member). As the top selection member 20 is rotated, salt is metered into each cavity 21 and passed through a transfer conduit 26. The transfer conduit is in communication with both the top selection member 20 and bottom selection member but salt does not pass through the transfer conduit unless a cavity in either of the selection members are aligned with openings in it (the transfer conduit contains a first opening in communication with cavities on the top selection member and a second opening in communication with cavities on the bottom selection member). As such, as salt flows independently through the cavities 21 in the top selection member 20, it remains in the transfer conduit until a cavity 11 in the bottom selection 10 member rotates past an opening in it (until a cavity in the bottom selection member "opens"). The salt will then pass into a cavity 11 in the bottom selection member and, when that cavity in the bottom member rotates past an exit opening 15, the salt is dispensed. Figure 2 also shows a bottom casing 09 for the metered device. In the specific illustration in Figure 2, the bottom casing is shown in a transparent manner such that the bottom selection member 10 is also depicted.

In other embodiments, by repeatedly opening and closing one or more cavities, it is possible to administer an additive amount of salt. For example, if a single administration (e.g. serving) of salt is 150mg, a 50mg transfer conduit in communication with one or more cavities in a selection member be opened and closed three times such that the cumulative amount of salt passed through the cavities and into the transfer conduit totals 150mg (for that single administration or serving). Of course, the transfer conduit may be of any volume or size and any number of opening and closing sequences may be used to result in the desired administration amount. Continuing with the 150mg example from above, if the metering mechanism includes a 15mg transfer conduit, one or more cavities in one or more selection members may be opened and closed 10 times past the transfer conduit to result in a 150mg salt administration. Alternatively, and merely as another example, two 15mg transfer conduits may be included in a metering mechanism and each of the cavities may be opened and closed five times past the transfer conduits, resulting in a 150mg administration. It is desirable to select a transfer conduit having the lowest common denominator volume such that the cumulative amount of salt may be administered by any series of opening and closing sequences.

In yet other embodiments such as where a variety of different sized transfer conduits are combined into a dispenser, one of skill in the art could combine a 50mg transfer conduit and a 25mg transfer conduit such that 175mg of salt may be administered by opening and closing the 50mg cavity three times and the 25mg cavity once.

The selection members may be opened and closed manually or with an electric motor. In some embodiments, an electric motor is coupled to software or other control logic such that the software may determine which selection member, and therefore which cavity to open and close and/or the number of times any cavity must open and close so as to meter, measure, or administer an amount of salt. Such a dispenser may also record or track the cumulative salt administered over a specific period of time, such as daily.

In another embodiment, the dispenser may have a first selection member with a plurality of cavities sized according to whether a regular salt intake or restricted salt intake diet is being followed. A second selection member can have a plurality of cavities which limit the dispensed volume of salt to, for example, 10%, 20%, or 30% of the total daily value of salt.

In some embodiments, a third and fourth selection member may be included in the dispenser. The third selection member can be positioned between the first and second selection members and have at least one cavity. The fourth selection member can be positioned between the second selection member and a dispenser exit and include at least one cavity. The third and fourth selection members can be biased to a closed position to prevent salt from escaping the chamber while the user selects which volume of salt to dispense. The third and fourth selection members can be maneuvered after the selection has been made to allow salt to flow from the chamber, through the first selection member, into the second selection member, and out the dispenser exit.

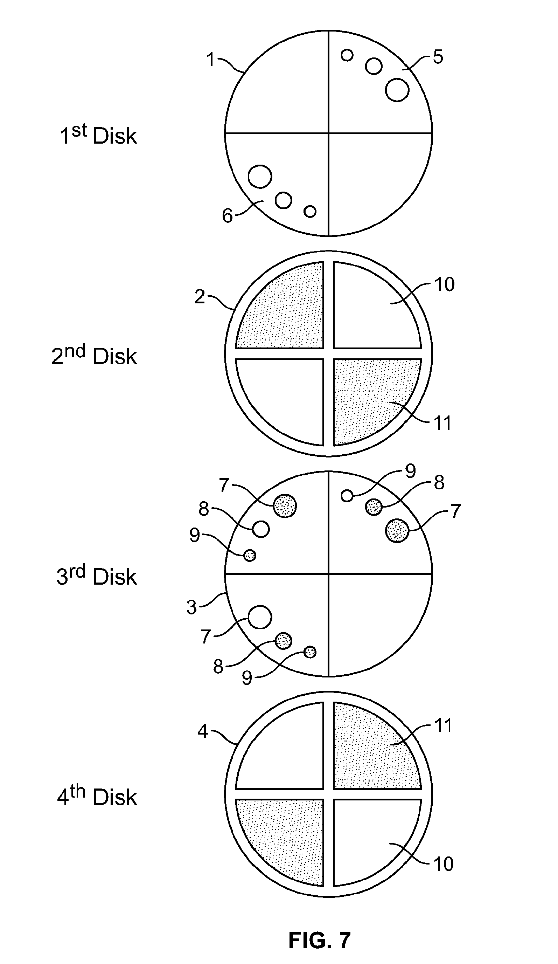

FIG. 7 shows one embodiment of a selection member in accordance with the disclosure. FIG. 7 shows a first disc 1, a second disc 2, a third disc 3, and a fourth disc 4. The first disc 1 and third disc 3 are each shown having a plurality of cavities.

The first disc 1 has a first group of cavities 5 which are sized for a regular salt intake diet. The first disc 1 also has a second group of cavities 6 for use with a restricted salt diet. Each of the holes in the groups 5, 6 are sized for a portion of the daily intake to be dispensed. In the embodiment shown, the cavities are sized for 10%, 20%, or 30% of the daily value for each diet. The user can manipulate the first disc 1 to select whether they are on a normal or restricted salt diet.

The third disc 3 has three separate groupings of cavities. Only one of the cavities in each group extends through the third disc 3. The other cavities in each group are closed to prevent material from flowing through the third disc 3. Each grouping has a different unobstructed cavity to allow a user to select whether they would like to use the 10%, 20%, or 30% sized cavity. The user can manipulate the third disc 3 in a similar manner to that of the first disc 1.

The second disc 2 and fourth disc 4 have alternating open 10 and closed 11 areas. The user can rotate the second 2 and fourth 4 discs to align the open areas 10 with the selected cavities on the first 1 and third 3 discs. This allows salt to flow from the chamber, through the first 1, second 2, third 3, and fourth 4 discs to dispense the material. In some embodiments, the second 2 and fourth 4 discs are biased to the closed position to prevent salt from flowing through the first 1 and third 3 discs while the selection is being made.

The dispenser may also include a membrane, gasket, or other sealing means to seal the space between the selection members. In other embodiments, bristles can be used to ensure the salt either remains in the chamber, or is dispensed as intended and does not escape into any crevices between the selection members and the exterior walls.

It may be desirable to minimize moisture that comes into contact with the material in the chamber to be dispensed. It is possible that the metering mechanism may be made from materials that assist in preventing or mitigating atmospheric moisture from contacting or adsorbing on the salt granules. In some embodiments, the dispenser and metering mechanism can be at least partially manufactured from materials having hygroscopic properties (*e.g.* nylon, ABS, polycarbonate, cellulose, poly(methyl methacrylate), silica, or plaster of paris). In other embodiments, the dispenser may include a sealing member such as seals, gaskets, and similar features that assist in mitigation exposure of humid air or moisture into the chamber or areas of the metering device where salt could agglomerate (either when the device is in use or stored).

Further, it is possible to include moisture absorbing components or materials throughout the device to further mitigate moisture from adsorbing onto the granular material. Moreover, in embodiments utilizing pre-filled and disposable cartridges, these pre-filled cartridges may be manufactured in such conditions that the amount of moisture is kept at a minimum to prevent or mitigate agglomeration when used.

## Claims

1. A metered dispenser comprising:
(a) a chamber for holding a material to be administered;
(b) a top selection member having one or more top cavities, wherein each of said one or more top cavities are in continuous and direct communication with said material in said chamber;
(c) a bottom selection member parallel and directly coupled to said top selection member such that said bottom and top selection members rotate together in a single direction, said bottom selection member having one or more bottom cavities; and
(d) a fixed transfer conduit situated between said top and bottom selection members and comprising a space configured to receive material from said one or more top cavities through a first opening and to provide material to said one or more bottom cavities through a second opening, and wherein said first and second openings are opposite from each other.

2. The metered dispenser of claim 1, wherein said material is salt.

3. The metered dispenser of claim 1 or 2, wherein said top selection member comprises plural cavities and wherein said bottom selection member comprises an equal number of cavities as said top selection member.

4. The metered dispenser of claim 3, wherein each of said cavities in each of said selection members are the same size.

5. The metered dispenser of claim 3 or 4, wherein said top cavities and said bottom cavities are misaligned relative to each other.

6. The metered dispenser of one of claims 1 to 5, further comprising a motor, control logic, and a user interface.

7. The metered dispenser of one of claims 1 to 6, wherein said metered dispenser administers salt according to user inputs based on a normal diet, a restricted diet, or any variation thereof.

8. The metered dispenser of one of claims 1 to 7, further comprising an exit opening in communication with said bottom cavities.

9. The metered dispenser of one of claims 1 to 8, further comprising a vibrating mechanism.

10. The metered dispenser of one of claims 1 to 9, wherein said dispenser is configured to dispense about 120mg to about 600mg of sodium per serving.

11. The metered dispenser of claim 10, wherein said top and bottom selection members each have two cavities.

12. A method of metering and administering salt with the dispenser of one of claims 1 to 11.

13. A method of tracking salt intake comprising:
providing the metered dispenser of one of claims 1 to 11;
providing salt in said top cavities;
sequentially rotating said top and bottom selection members such that salt is sequentially
transferred from said one or more top cavities through said transfer conduit and into said one or more bottom cavities; and further transferred from said one or more bottom cavities through an exit opening.

14. The method of claim 13, wherein said top and bottom selection members fully rotate once, so as to administer about 600 mg of NaCl.

15. The method of claim 13 or 14, wherein said top and bottom selection members are actuated by an electric motor.
